# DEMANDE DE BREVET EUROPEEN

(11) **EP 2 267 649 A1**
(43) Date de publication de la demande: **29.12.2010**
(21) Numéro de dépôt: 09305538.2
(22) Date de dépôt: 12.06.2009
(51) Int. Cl.: G06K 19/077

(54) **Dispositif électronique portable à faible consommation électrique**

(71) Demandeur: Gemalto SA, 92190 Meudon (FR)
(72) Inventeur: Thill, Michel, 92190 Meudon (FR)

(57) **Abrégé**

L'invention concerne le domaine des dispositifs électroniques portables (1) utilisant un protocole de communication sans contact pour lequel il est important de préserver la capacité de moyens d'alimentation (4) en énergie électrique. L'invention prévoit qu'un tel dispositif (1) comporte des moyens de détection (6) pour détecter un mouvement caractéristique provoqué par un porteur du dispositif pour déclencher le démarrage du dispositif après détection dudit mouvement caractéristique.

## Description

L'invention concerne des dispositifs électroniques communiquant avec le monde extérieur principalement à l'aide de protocoles de communication sans contact. De tels dispositifs, par exemple des badges, des cartes à puce, des porte-cartes électroniques, communiquent avec un terminal ou un lecteur au moyen de signaux de type radioélectrique ou utilisent encore une technologie telle Bluetooth etc.

L'invention trouve de nombreuses applications dans les transactions monétaires, le porte-monnaie électronique, les transactions relatives à la santé, aux jeux, au contrôle d'accès.

Elle concerne plus particulièrement des dispositifs comprenant des moyens propres d'alimentation électrique permettant de fournir l'énergie nécessaire à leur fonctionnement et pour leur permettre de mettre en oeuvre de telles communications. Les moyens d'alimentation consistent généralement en une ou plusieurs batteries. Certaines batteries ne sont pas rechargeables afin d'en réduire le coût et l'encombrement. D'autres batteries peuvent être rechargées mais l'action de recharger peut être contraignante voire peu évidente à mettre en oeuvre et entraîner un surcoût. Quelle que soit la technologie choisie, il est primordial de préserver la capacité d'une batterie à fournir l'énergie suffisante pour garantir un fonctionnement nominal d'un dispositif communicant.

Pour palier à cet inconvénient une première solution consiste à doter un tel dispositif d'un bouton, par exemple de type marche-arrêt, permettant de connecter ou déconnecter un microcontrôleur desdits moyens d'alimentation.

Cette technique peut être onéreuse et peu fiable. En effet, la mécanique généralement utilisée peut présenter rapidement des signes d'usure. Cette technique peut en outre nécessiter une action peu évidente pour un porteur ou utilisateur d'un dispositif notamment dans le cas où un bouton de taille réduite est utilisé. Un tel bouton peut par ailleurs être malencontreusement actionné à l'insu dudit porteur selon que les conditions de stockage ou la nature de l'environnement proche du dispositif puissent provoquer un démarrage intempestif et involontaire. Une batterie peut dès lors se décharger rapidement compte tenu de la mise sous tension inopinée du microcontrôleur du dispositif.

Une autre solution consiste à doter un tel dispositif électronique portable de moyens permettant de démarrer automatiquement le microcontrôleur dudit dispositif dès que ce dernier entre dans un champ de type radiofréquences par exemple. Le champ « réveille » ainsi le dispositif, notamment son microcontrôleur pour lui permettre de mettre en oeuvre une transaction. A l'issue de celle-ci, le microcontrôleur coupe son fonctionnement et ne puise plus dans la capacité des moyens propres d'alimentation du dispositif portable.

Toutefois, le réveil intempestif et fréquent du microcontrôleur en présence d'un champ alors que le porteur dudit dispositif ne souhaite pas forcément réaliser une transaction amenuise grandement l'autonomie du dispositif.

L'invention vise à résoudre les inconvénients cités précédemment en permettant au dispositif de détecter lui-même un mouvement caractéristique et provoqué volontairement par son porteur. La détection dudit mouvement provoque le démarrage ou le réveil du microcontrôleur. La capacité des moyens d'alimentation électrique est ainsi préservée et l'autonomie du dispositif communicant maximisée.

A cette fin, il est prévu un dispositif électronique portable comportant :
- un microcontrôleur,
- des moyens de communication coopérant avec ledit microcontrôleur pour émettre et/ou recevoir des signaux radioélectriques à destination et/ou en provenance d'un terminal selon un protocole de communication sans contact,
- des moyens d'alimentation pour fournir une énergie électrique permettant le fonctionnement du microcontrôleur. Pour préserver la capacité desdits moyens d'alimentation, le dispositif comporte un détecteur de mouvement pour détecter un mouvement caractéristique provoqué par un porteur du dispositif. En outre ledit détecteur délivre un signal électrique pour entraîner le démarrage du microcontrôleur et la délivrance à ce dernier de l'énergie électrique depuis les moyens d'alimentation.

Selon une première variante de réalisation d'un dispositif conforme à l'invention, le détecteur peut délivrer ledit signal électrique au microcontrôleur provoquant le démarrage de ce dernier.

Selon une deuxième variante, le détecteur peut délivrer ledit signal électrique à des moyens de commutation pour appliquer au microcontrôleur l'énergie disponible depuis les moyens d'alimentation, provoquant le démarrage dudit microcontrôleur.

Pour augmenter davantage l'autonomie d'un dispositif l'invention prévoit que le détecteur peut nécessiter pour fonctionner une quantité d'énergie insignifiante voire nulle au regard de l'énergie nécessaire au fonctionnement du microcontrôleur.

A titre d'exemple, le détecteur d'un dispositif conforme à l'invention peut comporter des composants électroniques passifs.

En variante, ledit détecteur peut comporter un accéléromètre voire un capteur de lumière, en lieu et place ou en association.

Selon un mode de réalisation préféré d'un tel dispositif, l'invention prévoit que le microcontrôleur puisse interrompre son fonctionnement et commander la suspension de l'alimentation électrique à la suite d'une période temporelle prédéterminée d'inactivité.

En outre, toujours pour accroître l'autonomie, l'invention prévoit que le microcontrôleur puisse en outre interrompre son fonctionnement et commander la suspension de l'alimentation électrique en cas d'absence de champ radioélectrique, absence détectée via les moyens pour émettre et/ou recevoir.

D'autres caractéristiques et avantages apparaîtront plus clairement à la lecture de la description qui suit et à l'examen des figures qui l'accompagnent parmi lesquelles :
- les figures 1 à 3 présentent respectivement un dispositif communiquant selon des techniques appartenant à l'art antérieur ;
- les figures 4 à 6 présentent respectivement un mode de réalisation d'un dispositif communicant conforme à l'invention.

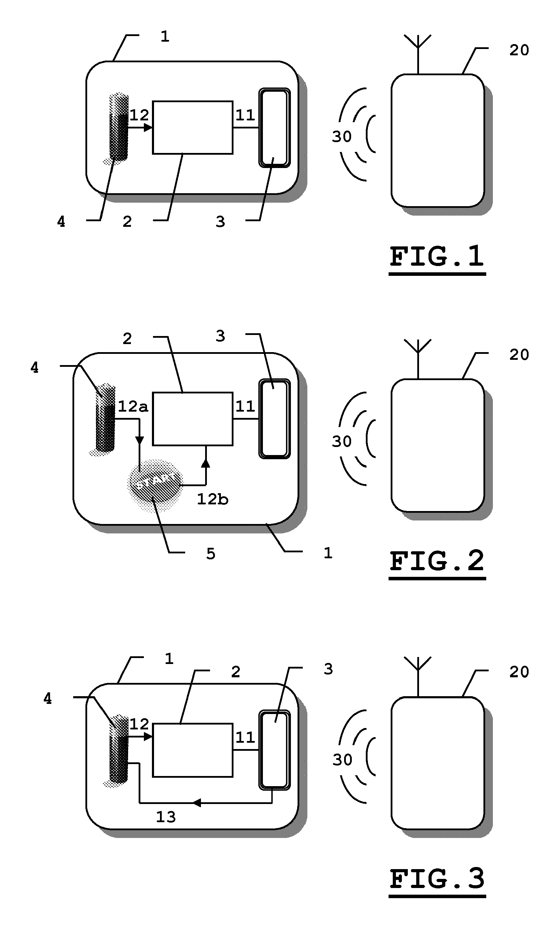

La figure 1 présente un dispositif communicant 1 connu comprenant un microcontrôleur 2 apte à mettre en oeuvre un programme d'application. Ainsi le dispositif 1 peut recevoir du monde extérieur des commandes ou ordres qui sont interprété(e)s par le microcontrôleur 2 qui réalise en retour des fonctions. Pour mettre en oeuvre lesdites fonctions, le microcontrôleur peut exploiter des mémoires de programmes et/ou de données internes au microcontrôleur ou coopérant avec ce dernier. Pour recevoir des commandes du monde extérieur voire transmettre un retour des résultats ou requêtes, le microcontrôleur 2 coopère 11 avec des moyens de communication 3 pour émettre et/ou recevoir, moyens représentés en liaison avec la figure 1, sous la forme d'une bobine ou antenne.

Afin de mettre en oeuvre des protocoles de communication utilisant par exemple la technologie Bluetooth, il est nécessaire que le dispositif 1 comporte des moyens d'alimentation en énergie électrique 4. Lesdits moyens délivrent 12 au microcontrôleur 2 l'énergie nécessaire et suffisante pour fonctionner. Les échanges 30 entre le dispositif 1 et le monde extérieur, représenté en liaison avec la figure 1 sous la forme d'un terminal 20, se font au travers d'un champ par exemple de type radiofréquence. Un tel dispositif 1 est par exemple un badge ou une carte à puce muni(e) d'une antenne. Il peut également se présenter sous la forme d'un porte-carte hébergeant une carte à puce conventionnelle - ne disposant pas de moyens de communication sans contact - et transformant ladite carte en dispositif communicant. La structure, la taille, la forme et les fonctions du dispositif 1 pourraient être de toutes autres natures.

Quoi qu'il en soit, la capacité à fournir l'énergie électrique au microcontrôleur est primordiale. Ainsi si les moyens 4 comportent une ou plusieurs batteries non rechargeables, il devient nécessaire d'effectuer une opération de maintenance visant à remplacer lesdites batteries dès lors que celles-ci sont déchargées ou présentent un faible niveau d'énergie. Parfois, un tel dispositif 1 est pur et simplement mis au rebut dès que les moyens d'alimentation en énergie électrique 4 sont déchargés.

Pour préserver la capacité des moyens d'alimentation en énergie électrique d'un dispositif communicant, une technique connue consiste à adapter ledit dispositif pour lui adjoindre des moyens de commutation visant à connecter et déconnecter le microcontrôleur et les batteries. Ainsi la figure 2 permet d'illustrer un mode de réalisation connu visant à utiliser un commutateur 5, tel un bouton de type marche/arrêt actionnable par le porteur du dispositif 1. La liaison directe 12 entre le microcontrôleur 2 et les moyens 4 d'alimentation 4 telle que présentée en figure 1 est ainsi remplacée par une liaison discontinue 12a et 12b, connectant respectivement d'une part les moyens d'alimentation 4 à un bouton 5 et d'autre part ledit bouton 5 au microcontrôleur 4.

Ainsi selon un premier mode opératoire, le porteur du dispositif 1 actionne le bouton en position « démarrer » ou « start » en langue anglaise, pour rendre opérationnel le dispositif. Après utilisation et pour mettre en position de repos ce dernier, le porteur relâche le bouton 5 (dans le cas d'un bouton poussoir) ou actionne celui-ci dans une position « arrêt » visant à rompre la liaison entre les moyens d'alimentation 4 et le microcontrôleur 2.

La figure 3 permet d'illustrer une solution alternative connue afin de préserver la capacité des moyens d'alimentation 4 d'un dispositif 1. Selon cette technique, un dispositif 1 comporte un microcontrôleur 2 respectivement en liaison 11 avec des moyens pour recevoir et/ou émettre 3 et en liaison 12 avec des moyens d'alimentation 4 sous la forme d'une ou plusieurs batteries électriques dont certaines sont rechargeables.

La solution consiste à adapter un tel dispositif pour relier 13 lesdites batteries rechargeable aux moyens pour recevoir et/ou émettre 3. Ainsi il est possible d'utiliser en partie, pour recharger ces dernières, le champ 30 généré pour assurer la communication entre le dispositif 1 et un terminal 20. En variante, un tel dispositif peut disposer d'une antenne distincte des moyens 3, ou de tout autre moyen permettant d'utiliser une partie du champ 30 pour recharger les moyens d'alimentation 4.

Les techniques connues évoquées précédemment se révèlent généralement peu satisfaisantes. Ainsi la solution connue selon la figure 1 entraîne une mise au rebut prématurée d'un dispositif ou des opérations de maintenance onéreuses.

La technique selon la figure 2 peut se montrer également onéreuse et peu fiable. En effet, la mécanique généralement utilisée peut présenter rapidement des signes d'usure. Cette technique peut en outre nécessiter une action peu évidente pour un porteur ou utilisateur d'un dispositif. Un tel bouton peut par ailleurs être malencontreusement actionné eu égard à l'environnement immédiat du dispositif. Une batterie peut dès lors se décharger rapidement compte tenu de la mise sous tension inopinée et involontaire du microcontrôleur du dispositif.

Enfin la technique selon la figure 3 nécessite de doter le dispositif de batteries rechargeables généralement coûteuses en prix et en encombrement. En outre le rechargement partiel et systématique des batteries alors que celles-ci ne sont pas nécessairement et intégralement déchargées diminue l'autonomie intrinsèque de celles-ci.

L'invention permet de résoudre les inconvénients des solutions connues en adaptant un dispositif électronique communicant tel que celui décrit en liaison avec la figure 1. Ainsi il devient possible d'optimiser la consommation électrique nécessaire au fonctionnement d'un microcontrôleur et de moyens de communications sans avoir recours à des solutions onéreuses, peu fiables et sans pénaliser le porteur ou utilisateur du dispositif en lui imposant un mode opératoire fastidieux.

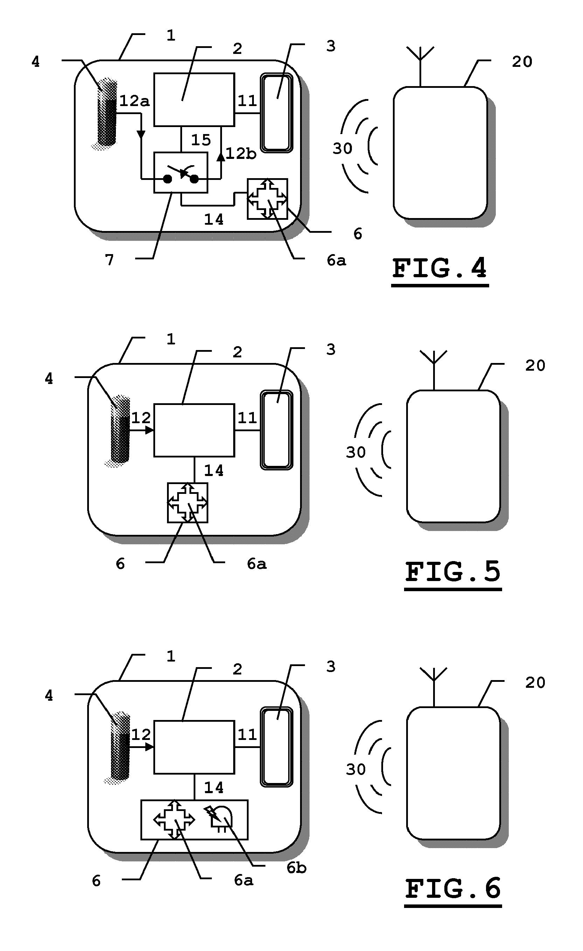

La figure 4 illustre un premier mode de réalisation d'un dispositif conforme à l'invention. Ainsi un tel dispositif 1 comporte un microcontrôleur 2 en liaison 11 avec des moyens de communication 3 pour émettre et/ou recevoir. Il comporte en outre des moyens d'alimentation en énergie électrique 4 en liaison 12a et 12b avec ledit microcontrôleur 2. La liaison se fait au travers de moyens de commutation 7 par exemple du type « bascules logiques ». Les moyens 7 permettent à réception d'un signal de commande, d'assurer ou de rompre la liaison entre les moyens d'alimentation 4 et le microcontrôleur 2. Pour commander lesdits moyens de commutation 7, le dispositif comporte des moyens de détection 6 pour détecter un mouvement caractéristique et provoqué volontairement par un porteur du dispositif 1. Les moyens de détection 6 correspondent à un détecteur de mouvement.

A titre d'exemple ledit détecteur de mouvement 6 comportent un accéléromètre 6a. Il existe en effet différents types d'accéléromètre : accéléromètre à détection piézoélectrique, piézorésistive, capacitive, inductive, optique...

Certains accéléromètres comportent une ou plusieurs poutres vibrantes ou exploitent des ondes de surface. D'autres sont réalisés à partir de composants électroniques tels des condensateurs utilisant de très faibles courants électriques... Certains cristaux et certaines céramiques ont la propriété de se charger électriquement lorsqu'elles sont soumises à une déformation. Le cristal se charge sur deux faces en regard avec des charges opposées lorsqu'on le soumet à une force exercée entre ces deux faces. Une métallisation des faces permet de recueillir une tension électrique qui peut être utilisée dans un dispositif. Les applications connues d'un accéléromètre sont nombreuses : mesure de vitesse, mesure de déplacement, analyse vibratoire, mesure d'inclinaison, détection de choc etc. L'invention propose une application particulièrement innovante d'un détecteur de mouvement tel un accéléromètre. En effet, selon la nature de l'accéléromètre et de la logique ou de « l'intelligence » des moyens de commutation 7, il est possible de détecter un mouvement caractéristique et volontaire du porteur du dispositif 1. Il est ainsi possible de modéliser plus ou moins précisément un mouvement que le dispositif pourra juger volontaire et attendu pour déclencher la mise en route du microcontrôleur 2.

Les moyens de détection 6, comportant par exemple un accéléromètre, délivrent un signal de commande 14 aux moyens de commutation 7 après avoir détecté ledit mouvement caractéristique. A réception dudit signal 14, les moyens de commutation 7 appliquent au microcontrôleur l'énergie disponible depuis les moyens d'alimentation 4, provoquant le démarrage dudit microcontrôleur 2.

Selon un mode de réalisation préféré, à l'issue de la transaction réalisée par le microcontrôleur, ce dernier transmet un signal 15 aux moyens de commutation 7 pour rompre l'alimentation électrique. Ainsi les moyens d'alimentation et le microcontrôleur sont déconnectés et la capacité de moyens d'alimentation à fournir de l'énergie électrique est préservée. En variante, le microcontrôleur 2 peut détecter l'absence d'un champ électrique 30 nécessaire pour communiquer avec le monde extérieur. Dans ce cas, après une période prédéterminée, le microcontrôleur délivre ledit signal 15 et l'alimentation électrique n'est plus délivrée par les moyens 4.

La figure 5 présente une variante de réalisation d'un dispositif conforme à l'invention. Cette variante concerne un dispositif 1 qui comporte un microcontrôleur 2 en liaison 11 avec des moyens de communication 3 pour émettre et/ou recevoir. Il comporte en outre des moyens d'alimentation en énergie électrique 4 en liaison directe 12 avec ledit microcontrôleur 2. Bien que ce dernier soit en permanence connecté aux moyens 4 d'alimentation en énergie électrique, il ne consomme que très peu d'énergie durant la période où le microcontrôleur est en veille.

Le dispositif 1 comporte des moyens 6 pour détecter un mouvement caractéristique et provoqué volontairement par un porteur du dispositif 1. A titre d'exemple lesdits moyens 6 comportent un accéléromètre 6a.

Les moyens de détection 6 délivrent un signal de commande 14 au microcontrôleur 2 après avoir détecté ledit mouvement caractéristique. A réception dudit signal 14, le microcontrôleur en état de veille et démarre son fonctionnement nominal lui permettant notamment de communiquer avec le monde extérieur. Ce n'est que lorsque le microcontrôleur est en mode de fonctionnement nominal qu'il consomme davantage d'énergie depuis les moyens d'alimentation 4. Selon un mode de réalisation préféré, à l'issue de la transaction réalisée par le microcontrôleur, ce dernier bascule à nouveau dans un mode de fonctionnement dit de « veille » peu consommateur en énergie électrique. Ainsi la capacité de moyens d'alimentation à fournir de l'énergie électrique est préservée. En variante, le microcontrôleur 2 peut détecter l'absence d'un champ électrique 30 nécessaire pour communiquer avec le monde extérieur. Dans ce cas, après une période prédéterminée, le microcontrôleur bascule en mode de veille et les besoins en énergie électrique du microcontrôleur redeviennent quasi nuls.

La figure 6 permet d'illustrer une variante de réalisation dans laquelle les moyens de détection 6 pour détecter un mouvement caractéristique provoqué par un porteur du dispositif comporte un plusieurs capteurs afin d'affiner ladite détection de mouvement. Ainsi les moyens de détection 6 peuvent comporter un capteur de détection de lumière 6b. Ainsi il est possible de détecter le fait que le porteur du dispositif 1 extrait celui-ci d'un espace de stockage ou d'un d'étui. Cette détection peut être de nature à attester ou confirmer une utilisation imminente du dispositif. Un tel capteur 6b peut être associé à un accéléromètre 6a ou à tout autre capteur de pression, de choc etc. L'association de plusieurs capteurs peut ainsi enrichir les critères de détection d'un mouvement caractéristique du porteur du dispositif.

Bien que la figure 6 présente de manière préférée un mode de réalisation proche de celui-ci décrit en liaison avec la figure 5, il est tout à fait possible selon l'invention d'utiliser une association de capteurs telle que décrite précédemment pour constituer des moyens pour détecter 6 tels que décrits en liaison avec la figure 4, moyens pour commander des moyens de commutation 7.

Quelle que soit la nature de l'assemblage pour constituer les moyens de détection 6, il est souhaitable que les éléments constitutifs tels un accéléromètre 6a ne consomment pas ou très peu d'énergie par rapport à la consommation du microcontrôleur lorsque ce dernier communique avec le monde extérieur. A titre d'exemple, pour réaliser un badge à partir d'une carte à puce, les moyens de détection 6 peuvent consommer quelques microampères alors que plusieurs milliampères sont nécessaires pour alimenter le microcontrôleur de la carte à puce. Les dispositifs conformes à l'invention sont ainsi des dispositifs électroniques portables à faible consommation électrique et offrent une autonomie très intéressante quelle que soit la nature, rechargeable ou non, des moyens internes d'alimentation en énergie électrique.

L'invention a été décrite de manière non limitative en liaison avec le domaine des objets électroniques portables de types badges, ou encore cartes à puce. Elle peut concerner tout dispositif électronique portable utilisant un protocole de communication sans contact pour lequel il est important de préserver la capacité de moyens internes aptes à fournir une énergie électrique à un microcontrôleur.

## Revendications

1. Dispositif électronique portable (1) comportant :
- un microcontrôleur (2),
- des moyens de communication (3) coopérant (11) avec ledit microcontrôleur (2) pour émettre et/ou recevoir des signaux radioélectriques (30) à destination et/ou en provenance d'un terminal (20) selon un protocole de communication sans contact,
- des moyens d'alimentation (4) pour fournir une énergie électrique permettant le fonctionnement du microcontrôleur (2),
le dispositif étant **caractérisé :**
- **en ce qu**'il comporte en outre un détecteur de mouvement (6) pour détecter un mouvement caractéristique provoqué par un porteur du dispositif et,
- en ce que ledit détecteur (6) délivre un signal électrique (14) pour entraîner le démarrage du microcontrôleur et la délivrance à ce dernier de l'énergie électrique depuis les moyens d'alimentation (4).

2. Dispositif selon la revendication 1 dans lequel le détecteur de mouvement (6) délivre ledit signal électrique au microcontrôleur provoquant le démarrage de ce dernier.

3. Dispositif selon la revendication 1 dans lequel le détecteur de mouvement (6) délivre ledit signal électrique (14) à des moyens de commutation (7) pour appliquer au microcontrôleur (2) l'énergie disponible depuis les moyens d'alimentation (4), provoquant le démarrage dudit microcontrôleur.

4. Dispositif selon la revendication 1 dans lequel le détecteur de mouvement (6) nécessite pour fonctionner une quantité d'énergie insignifiante voire nulle au regard de l'énergie nécessaire au fonctionnement du microcontrôleur.

5. Dispositif selon la revendication 1 dans lequel le détecteur de mouvement (6) comporte des composants électroniques passifs.

6. Dispositif selon la revendication 1 dans lequel le détecteur de mouvement (6) comporte un accéléromètre (6a).

7. Dispositif selon la revendication 1 dans lequel le détecteur de mouvement (6) comporte un capteur de lumière (6b).

8. Dispositif selon la revendication 1 dans lequel le microcontrôleur (2) interrompt son fonctionnement et commande (15) la suspension de l'alimentation électrique à la suite d'une période temporelle prédéterminée d'inactivité.

9. Dispositif selon la revendication 1 dans lequel le microcontrôleur interrompt son fonctionnement et commande (15) la suspension de l'alimentation électrique en cas d'absence de champ radioélectrique (30), absence détectée via les moyens pour émettre et/ou recevoir (3).
